# FASCICULE DE BREVET EUROPEEN

(11) **EP 3 736 184 B1**
(45) Date de publication et mention de la délivrance du brevet: **24.11.2021**
(21) Numéro de dépôt: 20168190.5
(22) Date de dépôt: 06.04.2020
(51) Int. Cl.: B60T 7/06, B60R 21/09, G05G 1/32

(54) **VÉHICULE DOTÉ D'UN DISPOSITIF DE PROTECTION DES JAMBES DU CONDUCTEUR**
FAHRZEUG, DAS MIT EINER SCHUTZVORRICHTUNG FÜR DIE BEINE DES FAHRERS AUSGESTATTET IST
VEHICLE PROVIDED WITH A DEVICE FOR PROTECTING THE LEGS OF THE DRIVER

(30) Priorité: 10.05.2019 FR 1904861
(43) Date de publication de la demande: 11.11.2020
(73) Titulaire: Renault S.A.S., 92100 Boulogne-Billancourt (FR)
(72) Inventeur: BOITEANU, Florin, Moara Vlasiei, Ilfov (RO); ZGAJNAR, Patrick, 93600 AULNAY SOUS BOIS (FR)

(56) Documents cités:
- EP-A1- 3 098 124
- EP-A2- 2 107 442
- CN-U- 203 472 547
- DE-A1-102006 014 228
- FR-A1- 3 038 276

## Description

L'invention se rapporte à un véhicule doté d'un dispositif de protection des jambes du conducteur.

Les jambes d'un conducteur de véhicule automobile sont exposées à différents risques de blessures, en raison notamment de la présence de différents éléments placés devant lesdites jambes. En effet, dans le cas par exemple d'un choc accidentel du véhicule contre un obstacle extérieur, les jambes du conducteur peuvent subir un impact d'une pédale d'actionnement pouvant par exemple être une pédale d'embrayage, de frein ou d'accélération lors d'une phase de remontée brutale de celle-ci. Lorsque le véhicule est dans une phase de roulage normale, les jambes du conducteur peuvent venir interférer avec un équipement en saillie comme par exemple une chape de pédale d'accélération.

La demande EP3098124 se rapporte à un assemblage d'un fil et d'un support, ledit fil étant placé dans le véhicule afin de protéger les jambes du conducteur contre une remontée brutale d'une pédale d'actionnement lors d'un choc du véhicule, le document CN203472547U décrit aussi un agencement de pédale classique sans fil de l'interposition secondaire.

Un véhicule selon l'invention possède un dispositif de protection empêchant à la fois les jambes du conducteur d'être impactées par une pédale d'actionnement lors d'un choc du véhicule et de venir de venir interférer directement avec un équipement en saillie placé au-dessus desdites pédales.

L'invention a pour objet un véhicule comprenant une pédale de frein, une chape destinée à supporter une pédale d'accélération, et un dispositif de protection fixé à un élément de structure du véhicule, ledit dispositif comprenant un premier fil rigide placé derrière la pédale de frein et destiné à empêcher une remontée brutale de ladite pédale lors d'un choc du véhicule.

Selon l'invention, le dispositif de protection comprend un deuxième fil d'interposition rigide fixé au premier fil de manière à prolonger ledit premier fil, le deuxième fil d'interposition étant destiné à venir se placer entre la chape de la pédale d'accélération et les jambes du conducteur afin d'empêcher que celles-ci ne viennent directement interférer avec ladite chape.

Le principe d'un véhicule selon l'invention est de posséder un dispositif de protection des jambes du conducteur qui est amélioré, car il permet non seulement d'empêcher une remontée brutale de la pédale de frein dans le cas d'un choc du véhicule, mais également d'empêcher une interférence directe entre les jambes du conducteur et la chape de la pédale d'accélération lorsque le véhicule est dans une phase de roulage normale. Le dispositif de protection est donc efficace lors d'un choc accidentel du véhicule, mais également lors d'une phase normale de roulage du véhicule. Le deuxième fil est préférentiellement métallique, et est avantageusement soudé au premier fil.

Selon une caractéristique possible de l'invention, le deuxième fil d'interposition comprend deux segments latéraux parallèles et un segment de liaison reliant lesdits deux segments latéraux parallèles en étant perpendiculaire auxdits deux segments, la chape étant située entre les deux segments latéraux et à l'avant du segment de liaison. De cette manière, les deux segments latéraux et le segment de liaison entourent la chape, en étant placés au plus près de celle-ci sans créer de contact avec celle-ci.

Selon une caractéristique possible de l'invention, le premier fil constitue une extrémité d'un tronçon principal d'un fil principal solidarisé à un support fixé à un élément de structure du véhicule, le premier fil s'étendant suivant un axe transversal et horizontal du véhicule, le deuxième fil d'interposition prolongeant ledit premier fil suivant ledit axe. Le fil principal fait parti intégrante du dispositif de protection d'un véhicule selon l'invention. De cette manière, le dispositif de protection comprend le fil principal, le premier fil et le deuxième fil d'interposition.

Selon une caractéristique possible de l'invention, l'élément de structure est une traverse de planche de bord.

Selon une caractéristique possible de l'invention, le tronçon principal s'inscrit dans un plan longitudinal et vertical du véhicule. De cette manière le tronçon principal du fil principal n'a pas de fonction sécuritaire particulière et sert juste à supporter le deuxième fil d'interposition.

Selon une caractéristique possible de l'invention, le tronçon principal est incliné par rapport à un axe vertical.

Selon une caractéristique possible de l'invention, le dispositif de protection comprend un troisième fil d'interposition relié au tronçon principal du fil principal et destiné à empêcher la remontée d'une pédale d'embrayage dans le cas d'un choc du véhicule contre un obstacle extérieur. Le troisième fil d'interposition peut par exemple être soudé au tronçon principal du fil principal. Ce troisième fil d'interposition est différent du premier fil d'interposition et s'étend dans une direction différente. Ce troisième fil d'interposition a pour vocation de stopper la course vers l'arrière d'une pédale d'embrayage afin d'empêcher que ladite pédale ne vienne percuter la jambe du conducteur.

Selon une caractéristique possible de l'invention, le troisième fil d'interposition est soudé au tronçon principal du fil principal.

Selon une caractéristique possible de l'invention, le troisième fil d'interposition s'étend selon un axe transversal du véhicule, dans un sens qui est opposé à celui du deuxième fil d'interposition par rapport au tronçon principal du fil principal. De cette manière, le tronçon principal du fil principal, le premier fil d'interposition et le deuxième fil d'interposition constitue un dispositif de protection complet pour les jambes du conducteur, ledit dispositif ayant globalement une forme en T.

Selon une caractéristique possible de l'invention, le deuxième fil d'interposition est soudé au tronçon principal.

Un véhicule selon l'invention présente l'avantage de comporter un dispositif de protection des jambes, qui est efficace tout en demeurant de conception simple et peu encombrant. Ce dispositif de protection a l'avantage d'être complet, en comprenant une composante préservant les jambes du conducteur vis-à-vis d'une interférence directe avec la chape de pédale d'accélération, et vis-à-vis d'un choc suite à une remontée brutale d'une pédale d'actionnement pouvant par exemple être une pédale d'embrayage ou une pédale de frein.

On donne ci-après une description détaillée d'un mode de réalisation préféré d'un véhicule selon l'invention en se référant aux figures suivantes :
[fig.1] est une vue de côté montrant une interaction directe entre le genou d'un conducteur et la chape de pédale d'accélération,
[fig.2] est une vue en perspective d'un dispositif de protection d'un véhicule selon l'invention, permettant d'éviter l'interaction illustrée à la figure 1
[fig.3] est une vue en perspective du dispositif de protection de la figure 2 dans un environnement constitué par des pédales d'actionnement et la chape de la pédale d'accélération,
[fig.4] est une vue de face du dispositif de protection et de l'environnement de la figure 3.

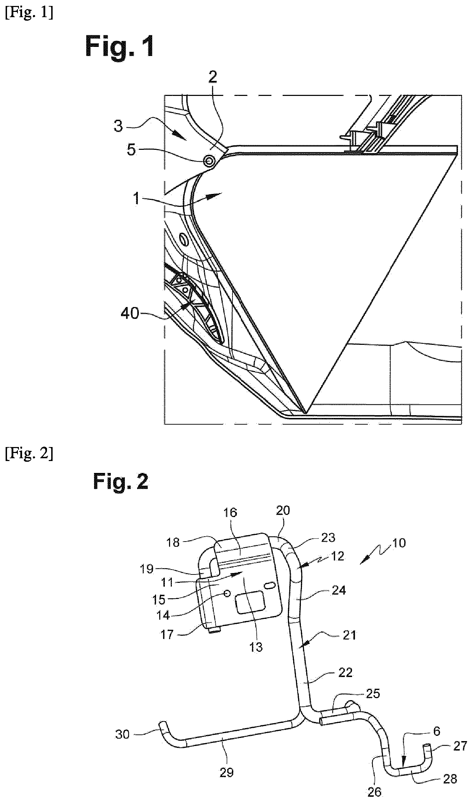

En se référant à la figure 1, lors d'une phase de roulage normale d'un véhicule selon l'invention, le genou 1 du conducteur risque de venir interférer directement avec une extrémité 2 d'une chape 3 d'une pédale d'accélération. Cette extrémité 2 possédant des parties angulaires et supportant au moins une vis 5 de fixation, risque en raison de ces reliefs dangereux 5, d'occasionner des blessures au niveau du genou 1 du conducteur.

En se référant aux figures 2, 3 et 4, afin de réduire voire d'éliminer ces risques de blessure, un véhicule selon l'invention comprend un deuxième fil 6 d'interposition apte à venir se placer entre la chape 3 de la pédale d'accélération 4 et le genou 1 du conducteur, afin d'empêcher une interaction directe entre ledit genou 1 et ladite chape 3.

En se référant à la figure 2, le deuxième fil d'interposition 6 appartient à un dispositif de protection 10 comprenant un support 11 et un fil principal 12 solidarisé audit support 11. Le support 11, qui est fixé à une traverse de planche de bord, comprend un corps plan 13 de faible épaisseur et comportant une pluralité d'ouvertures 14 pouvant avoir des formes différentes. Ces ouvertures 14 sont destinées au passage d'organes de fixation adaptés, tels que par exemple des vis, afin d'arrimer ledit support 11 à la traverse de planche de bord. Ce corps 13 est essentiellement délimité par deux surfaces parallèles et opposées et est prolongé par deux pattes 15, 16 s'étendant perpendiculairement l'une par rapport à l'autre tout en demeurant sensiblement dans le même plan.

En se référant aux figures 2, 3 et 4, le corps 13 du support 11 comprend un premier logement 17 allongé, situé sur l'une 15 des deux pattes, ledit premier logement 17 étant assimilable à un renfoncement cylindrique ouvert. Ce renfoncement 17 peut par exemple être obtenu par emboutissage du support 11 et comporte une ouverture dont la largeur est inférieure au diamètre du fil principal 12. Le corps 13 du support 11 comprend un deuxième logement 18 allongé, situé sur l'autre patte 16, ledit deuxième logement 18 étant assimilable à un renfoncement cylindrique ouvert. Ce deuxième renfoncement 18 peut par exemple être obtenu par emboutissage du support 11 et comporte une ouverture dont la largeur est inférieure au diamètre du fil principal 12. Le premier logement 17 et le deuxième logement 18 s'étendent perpendiculairement l'un par rapport à l'autre. Le support 11 est préférentiellement réalisé en métal. Le fil principal 12 comprend un premier segment rectiligne 19 qui est prolongé par un deuxième segment rectiligne 20 s'étendant perpendiculairement au premier segment 19. Le deuxième segment rectiligne 20, est lui-même prolongé par un tronçon principal 21 qui s'étend perpendiculairement au deuxième segment 20, si bien que le premier segment 19 et le tronçon principal 21 sont parallèles et se retrouvent côte à côte. Le tronçon principal 21 présente une première partie 22 rectiligne et une deuxième partie constituée par deux tronçons secondaires 23, 24 inclinés l'un par rapport à l'autre et formant une bosse. Il est supposé que le fil principal 12 présente un diamètre constant, laissant supposer que le premier segment 19, le deuxième segment 20 et le tronçon principal 21 comprenant les deux tronçons secondaires 23, 24 et la première partie 22 rectiligne ont tous le même diamètre.

Le fil principal 12 est préférentiellement soudé au support 11. Ce fil principal 12 est donc soudé au support 11 de sorte que le premier segment 19 et le deuxième segment 20 occupent respectivement le premier logement 17 et le deuxième logement 18 du support 11.

En se référant à la figure 2, la première partie 22 du tronçon principal 21 se termine par un premier fil 25 s'étendant perpendiculairement à ladite première partie 22.

En se référant aux figures 2, 3, et 4 le deuxième fil 6 d'interposition, qui est préférentiellement réalisé en métal, est soudé au premier fil 25. Ce deuxième fil d'interposition 6 comprend deux segments latéraux 26, 27 parallèles et un segment de liaison 28 reliant lesdits deux segments latéraux 26, 27 en étant perpendiculaire auxdits deux segments 26, 27.

Un troisième fil d'interposition 29, qui est avantageusement réalisé en métal, est soudé à la première partie 22 du tronçon principal 21 du fil principal 12. Ce troisième fil d'interposition 29 est rectiligne et se termine par un segment replié 30 à sensiblement 90°.

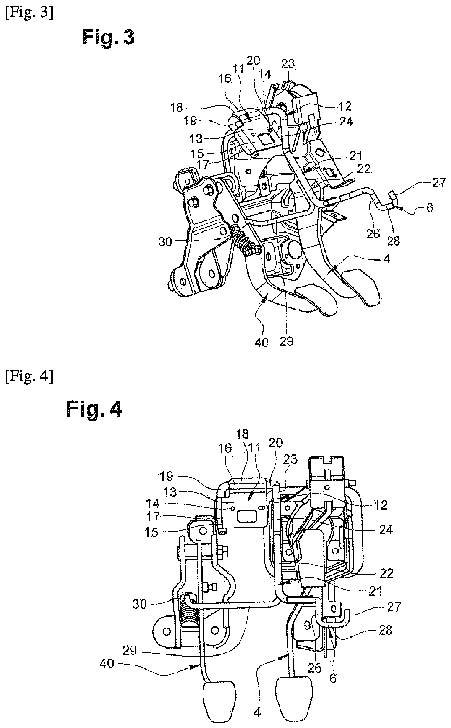

En se référant aux figures 3 et 4, lorsque le dispositif de protection 10 comprenant le support 11, le fil principal 12, le deuxième fil d'interposition 6 et le troisième fil d'interposition 29, est fixé dans le véhicule :
- Le tronçon principal 21 du fil principal 12 s'étend sous le support 11, dans un plan longitudinal et vertical du véhicule,
- Le premier fil 25 s'étend selon un axe transversal et horizontal du véhicule,
- Le deuxième fil d'interposition 6 se retrouve derrière la chape 3 de la pédale d'accélération, de sorte que les deux segments latéraux 26, 27 et le segment de liaison 28 entourent ladite chape 3 sans venir au contact de celle-ci,
- Le troisième segment d'interposition 29 s'étend selon un axe transversal et horizontal du véhicule, de l'autre côté du premier fil 25 par rapport au tronçon principal 21 du fil principal 12. Ainsi placé, le troisième segment 29 se retrouve derrière une pédale d'embrayage 40.

De cette manière, lors d'un choc frontal du véhicule contre un obstacle extérieur, le troisième fil d'interposition 29 va empêcher une remontée vers l'arrière de la pédale d'embrayage 40, préservant ainsi les jambes du conducteur. D'autre part, lors d'une phase normale de roulage du véhicule, le deuxième fil d'interposition 6 va empêcher le genou 1 du conducteur de venir interférer directement sur la chape 3 de la pédale d'accélération 4.

## Revendications

1. Véhicule comprenant une pédale de frein (4), une chape (3) destinée à supporter une pédale d'accélération, et un dispositif de protection (10) fixé à un élément de structure du véhicule, ledit dispositif (10) comprenant un premier fil rigide (25) placé derrière la pédale de frein (4) et destiné à empêcher une remontée brutale de ladite pédale (4) lors d'un choc du véhicule, caractérisé en ce le dispositif de protection (10) comprend un deuxième fil d'interposition (6) rigide fixé au premier fil (25) de manière à prolonger ledit premier fil (25), et en ce que le deuxième fil d'interposition (6) est destiné à venir se placer entre la chape (3) de la pédale d'accélération et les jambes du conducteur afin d'empêcher que celles-ci ne viennent directement interférer avec ladite chape (3).

2. Véhicule selon la revendication 1, **caractérisé en ce que** le deuxième fil d'interposition (6) comprend deux segments latéraux (26, 27) parallèles et un segment de liaison (28) reliant lesdits deux segments latéraux (26, 27) en étant perpendiculaire auxdits deux segments (26, 27), et **en ce que** la chape (3) est située entre les deux segments latéraux (26, 27) et à l'avant du segment de liaison (28).

3. Véhicule selon l'une quelconque des revendication 1 ou 2, **caractérisé en ce que** le premier fil (25) constitue une extrémité d'un tronçon principal (21) d'un fil principal (12) solidarisé à un support (11) fixé à un élément de structure du véhicule, et **en ce que** le premier fil (25) s'étend suivant un axe transversal et horizontal du véhicule, le deuxième fil d'interposition (6) prolongeant ledit premier fil (25) suivant ledit axe.

4. Véhicule selon la revendication 3, **caractérisé en ce que** l'élément de structure est une traverse de planche de bord.

5. Véhicule selon l'une quelconque des revendication 3 ou 4, **caractérisé en ce que** le tronçon principal (21) s'étend dans un plan vertical et longitudinal du véhicule.

6. Véhicule selon la revendication 5, **caractérisé en ce que** le tronçon principal (21) est incliné par rapport à un axe vertical.

7. Véhicule selon l'une quelconque des revendications 3 à 5, **caractérisé en ce que** le dispositif de protection (10) comprend un troisième fil d'interposition (29) relié au tronçon principal (21) du fil principal (12) et destiné à empêcher la remontée d'une pédale (40) d'embrayage dans le cas d'un choc du véhicule contre un obstacle extérieur.

8. Véhicule selon la revendication 7, **caractérisé en ce que** le troisième fil d'interposition (29) est soudé au tronçon principal (21) du fil principal (12).

9. Véhicule selon l'une quelconque des revendications 7 ou 8, **caractérisé en ce que** le troisième fil d'interposition (29) s'étend selon un axe transversal du véhicule, dans un sens qui est opposé à celui du deuxième fil d'interposition (6) par rapport au tronçon principal (21) du fil principal (12).

10. Véhicule selon l'une quelconque des revendications 3 à 9, **caractérisé en ce que** le deuxième fil d'interposition (6) est soudé au tronçon principal (21).

## Patentansprüche

1. Fahrzeug, umfassend ein Bremspedal (4), einen Gabelkopf (3) zum Tragen eines Gaspedals und eine Schutzvorrichtung (10), die an einem Strukturelement des Fahrzeugs befestigt ist, wobei die Vorrichtung (10) einen ersten starren Draht (25) umfasst, der hinter dem Bremspedal (4) angeordnet und dazu bestimmt ist, eine plötzliche Aufwärtsbewegung des Pedals (4) bei einem Aufprall des Fahrzeugs zu verhindern, **dadurch gekennzeichnet, dass** die Schutzvorrichtung (10) einen zweiten starren Zwischendraht (6) umfasst, der am ersten Draht (25) befestigt ist, so dass er den ersten Draht (25) verlängert, und dass der zweite Zwischendraht (6) dazu bestimmt ist, zwischen dem Gabelkopf (3) des Gaspedals und den Beinen des Fahrers angeordnet zu sein, um zu verhindern, dass letztere direkt mit dem Gabelkopf (3) in Kontakt kommen.

2. Fahrzeug nach Anspruch 1, **dadurch gekennzeichnet, dass** der zweite Zwischendraht (6) zwei parallele Seitensegmente (26, 27) und ein Verbindungssegment (28), das die beiden Seitensegmente (26, 27) verbindet und senkrecht zu den beiden Segmenten (26, 27) verläuft, umfasst und dass sich der Gabelkopf (3) zwischen den beiden Seitensegmenten (26, 27) und vor dem Verbindungssegment (28) befindet.

3. Fahrzeug nach einem der Ansprüche 1 oder 2, **dadurch gekennzeichnet, dass** der erste Draht (25) ein Ende eines Hauptabschnitts (21) eines Hauptdrahts (12) bildet, der fest mit einem an einem Strukturelement des Fahrzeugs befestigten festen Träger (11) angebracht ist, und dass sich der erste Draht (25) entlang einer horizontalen Querachse des Fahrzeugs erstreckt, wobei der zweite Zwischendraht (6) den ersten Draht (25) entlang dieser Achse verlängert.

4. Fahrzeug nach Anspruch 3, **dadurch gekennzeichnet, dass** das Strukturelement ein Querträger des Armaturenbretts ist.

5. Fahrzeug nach einem der Ansprüche 3 oder 4, **dadurch gekennzeichnet, dass** sich der Hauptabschnitt (21) in einer vertikalen Längsebene des Fahrzeugs erstreckt.

6. Fahrzeug nach Anspruch 5, **dadurch gekennzeichnet, dass** der Hauptabschnitt (21) relativ zu einer vertikalen Achse geneigt ist.

7. Fahrzeug nach einem der Ansprüche 3 bis 5, **dadurch gekennzeichnet, dass** die Schutzvorrichtung (10) einen dritten Zwischendraht (29) umfasst, der mit dem Hauptabschnitt (21) des Hauptdrahts (12) verbunden und dazu bestimmt ist, die Aufwärtsbewegung eines Kupplungspedals (40) im Fall eines Aufpralls des Fahrzeugs auf ein äußeres Hindernis zu verhindern.

8. Fahrzeug nach Anspruch 7, **dadurch gekennzeichnet, dass** der dritte Zwischendraht (29) mit dem Hauptabschnitt (21) des Hauptdrahts (12) verschweißt ist.

9. Fahrzeug nach einem der Ansprüche 7 oder 8, **dadurch gekennzeichnet, dass** sich der dritte Zwischendraht (29) entlang einer Querachse des Fahrzeugs in einer Richtung erstreckt, die derjenigen des zweiten Zwischendrahts (6) relativ zum Hauptabschnitt (21) des Hauptdrahts (12) entgegengesetzt ist.

10. Fahrzeug nach einem der Ansprüche 3 bis 9, **dadurch gekennzeichnet, dass** der zweite Zwischendraht (6) mit dem Hauptabschnitt (21) verschweißt ist.

## Claims

1. Vehicle comprising a brake pedal (4), a clevis (3) intended to support an accelerator pedal, and a protection device (10) fixed to a structural element of the vehicle, said device (10) comprising a first rigid wire (25) placed behind the brake pedal (4) and intended to prevent said pedal (4) rising sharply upon an impact of the vehicle, **characterized in that** the protection device (10) comprises a second rigid interposition wire (6) fixed to the first wire (25) so as to extend said first wire (25), and **in that** the second interposition wire (6) is intended to come to be placed between the clevis (3) of the accelerator pedal and the legs of the driver in order to prevent them coming to interfere directly with said clevis (3).

2. Vehicle according to Claim 1, **characterized in that** the second interposition wire (6) comprises two parallel lateral segments (26, 27) and a connecting segment (28) which connects said two lateral segments (26, 27) and is perpendicular to said two segments (26, 27), and **in that** the clevis (3) is situated between the two lateral segments (26, 27) and in front of the connecting segment (28) .

3. Vehicle according to either one of Claims 1 and 2, **characterized in that** the first wire (25) constitutes an end of a main portion (21) of a main wire (12) secured to a support (11) fixed to a structural element of the vehicle, and **in that** the first wire (25) extends along a horizontal transverse axis of the vehicle, the second interposition wire (6) extending said first wire (25) along said axis.

4. Vehicle according to Claim 3, **characterized in that** the structural element is a dashboard crossmember.

5. Vehicle according to either one of Claims 3 and 4, **characterized in that** the main portion (21) extends in a longitudinal vertical plane of the vehicle.

6. Vehicle according to Claim 5, **characterized in that** the main portion (21) is inclined relative to a vertical axis.

7. Vehicle according to any one of Claims 3 to 5, **characterized in that** the protection device (10) comprises a third interposition wire (29) connected to the main portion (21) of the main wire (12) and intended to prevent a clutch pedal (40) rising in the event of an impact of the vehicle against an external obstacle.

8. Vehicle according to Claim 7, **characterized in that** the third interposition wire (29) is welded to the main portion (21) of the main wire (12).

9. Vehicle according to either one of Claims 7 and 8, **characterized in that** the third interposition wire (29) extends along a transverse axis of the vehicle, in a direction which is opposite that of the second interposition wire (6) relative to the main portion (21) of the main wire (12).

10. Vehicle according to any one of Claims 3 to 9, **characterized in that** the second interposition wire (6) is welded to the main portion (21).
